# EUROPÄISCHE PATENTSCHRIFT

(11) **EP 2 860 011 B1**
(45) Veröffentlichungstag und Bekanntmachung des Hinweises auf die Patenterteilung: **04.05.2016**
(21) Anmeldenummer: 14003396.0
(22) Anmeldetag: 01.10.2014
(51) Int. Cl.: B29C 45/17, B29C 45/66, B29C 45/83

(54) **Spritzgießmaschine**
Injection moulding machine
Machine de moulage par injection

(30) Priorität: 09.10.2013 DE 102013016662
(43) Veröffentlichungstag der Anmeldung: 15.04.2015
(73) Patentinhaber: Wittmann Battenfeld GmbH, 2542 Kottingbrunn (AT)
(72) Erfinder: Brunbauer, Klaus, 2540 Bad Vöslau (AT); Knödler, Werner, 73760 Ostfildern (DE)
(74) Vertreter: Gosdin, Michael

(56) Entgegenhaltungen:
- EP-A1- 0 427 438
- WO-A1-2007/036243
- WO-A1-2011/019454
- AT-A4- 505 659
- DE-A1- 4 313 472
- DE-A1- 10 051 101
- JP-A- 2003 211 490
- US-A- 2 298 044
- Anonymous: "PIV DRIVES - POSIRACK", , 1. März 2009 (2009-03-01), Seiten 1-12, XP055163867, Gefunden im Internet: URL:http://www.brevini.com/wp-content/uplo ads/2014/03/C070-Posirack_605_2-de_en_it_f r_es_pt.pdf?__sw_csrfToken=be339209 [gefunden am 2015-01-21]

## Beschreibung

Die Erfindung betrifft eine Spritzgießmaschine, umfassend zwei relativ zueinander in eine Schließrichtung bewegliche Werkzeugaufspannplatten, wobei die Spritzgießmaschine mindestens einen von einem Motor angetriebenen Aktuator aufweist, mit dem ein Teil der Spritzgießmaschine in eine translatorische Verschieberichtung bewegt werden kann, wobei der Aktuator ein mit dem Teil in Verbindung stehendes Zahnstangenelement aufweist, wobei zwischen einem Antriebsritzel des Motors und mindestens einem mit dem Zahnstangenelement kämmenden ersten Zahnrad ein Untersetzungsgetriebe angeordnet ist.

Zum Auswerfen fertig spritzgegossener Formteile weist eine gattungsgemäße Spritzgießmaschine ein Auswerferelement auf. Durch Aktivierung eines Antriebsmotors eines Aktuators (Betätigungselement) zum entsprechenden Zeitpunkt des Spritzgießzyklus wird das Auswerferelement beispielsweise in Form einer Auswerferplatte in Schließrichtung bewegt. Am Auswerferelement angeordnete Auswerferstifte drücken dann das fertige Formteil aus der Werkzeugkavität heraus.

Eine gattungsgemäße Spritzgießmaschine ist aus der US 5 911 924 A bekannt. Ähnliche und andere Lösungen zeigen die DE 295 15 086 U1**, die** DE 690 32 817 T2, die WO 2011/019454 A1, die EP 0 427 438 A1**, die** DE 43 13 472 A1, die US 2 298 044 A und die DE 100 51 101 A1**.** Dichtungssysteme für Linearaktuatoren von Schließsystemen und von Plastifiziereinheiten sind aus der WO 2007/036243 A1, aus der JP 2003 211490 A und aus der AT 505 659 A4 bekannt.

Bekannt ist es hierbei auch, Kugelgewindetriebe (Spindel-Mutter-System) einzusetzen, die von einem Antriebsmotor angetrieben sind und über die zum entsprechenden Zeitpunkt die Linearbewegung eines Auswerferstifts veranlasst wird. Nachteilig ist bei dieser vorbekannten Lösung, dass das Massenträgheitsmoment mitunter relativ hoch ist, was die Dynamik der Auswerferbetätigung bei einem gegebenen verfügbaren Antriebsdrehmoment des Antriebsmotors herabsetzt. Ferner ist der Raumbedarf für eine solche Lösung nicht immer hinreichend gering.

Bei der genannten Lösung beim Einsatz eines Kugelgewindetriebs oder eines Direktantriebs ist es weiter nachteilig, dass bei Kollisionen des Auswerfers Folgeschäden auftreten.

Ein weiterer Aspekt ist, dass bei der vorbekannten Lösung unter Nutzung eines Kugelgewindetriebs eine Drehmomentstütze und Führung der Auswerferplatte nötig ist, was eine entsprechend aufwändige und teure Konstruktion nach sich zieht.

Genauso wie im Falle der translatorischen Bewegung eines Auswerferelements ist es beispielsweise im Falle des Einsatzes einer Kniehebel-Schließeinheit erforderlich, den Kreuzkopf der Kniehebel-Schließeinheit in eine vorgegebene Richtung hin und her zu bewegen. Hier gelten entsprechend ähnliche Probleme.

Der Erfindung liegt daher die **Aufgabe** zugrunde, eine Spritzgießmaschine der eingangs genannten Art hinsichtlich ihres Auswerfersystems und/oder Schließsystems so fortzubilden, dass ein möglichst dynamischer Antrieb der Auswerferelemente bzw. des Schließsystems gegeben ist. Das Auswerfersystem soll dabei in möglichst günstiger Weise in einer Schließeinheit einer Spritzgießmaschine untergebracht werden können, wobei insbesondere eine Anwendung in einer Kniehebelmaschine begünstigt werden soll. Das Auswerfersystem soll des weiteren möglichst als kompakte und abgeschlossene Einheit ausführbar sein, so dass insoweit insbesondere die Ölfreiheit an der Spritzgießmaschine gewährleistet werden kann. Die bei Kugelgewindetrieben notwendige Drehmomentstütze und Führung der Auswerferplatte soll ferner möglichst entfallen können. Gleichermaßen soll sich die Betätigung eines Kreuzkopfes einer Kniehebel-Schließeinheit günstig gestalten lassen, wobei ebenfalls die Ölfreiheit der Spritzgießmaschine ein wesentlicher Aspekt ist.

Die **Lösung** dieser Aufgabe durch die Erfindung ist dadurch gekennzeichnet, dass das Teil ein an mindestens einer der Werkzeugaufspannplatten angeordnetes Auswerferelement ist, das relativ zur Werkzeugaufspannplatte in Schließrichtung beweglich angeordnet ist, wobei das Zahnstangenelement relativ zu einem Gehäuse des Untersetzungsgetriebes durch ein Dichtungselement abgedichtet ist, wobei das Dichtungselement als Teleskopbuchse mit mindestens zwei relativ zueinander beweglichen Hülsenelementen ausgebildet ist.

Das Auswerferelement ist dabei bevorzugt eine Auswerferplatte.

Damit kann eine dynamische Bewegung des Auswerferelements bewerkstelligt werden.

Das Zahnstangenelement kann an zwei sich gegenüberliegenden Seiten je ein Zahnstangenprofil aufweisen, wobei zwei mit dem Zahnstangenelement kämmende erste Zahnräder für je ein Zahnstangenprofil vorgesehen sind und wobei die mit dem Zahnstangenelement kämmenden ersten Zahnräder vom Untersetzungsgetriebe synchron bewegt werden.

Das Untersetzungsgetriebe ist dabei bevorzugt als mehrstufiges Stirnradgetriebe ausgebildet.

In diesem Falle ist zunächst gemäß einer bevorzugten Ausgestaltung der Erfindung vorgesehen, dass das Untersetzungsgetriebe als erste Untersetzungsstufe ein mit dem Antriebsritzel des Motors kämmendes erstes Zwischenzahnrad aufweist, das neben einer mit dem Antriebsritzel kämmenden ersten Verzahnung eine zweite Verzahnung aufweist.

Das Untersetzungsgetriebe kann dann als zweite Untersetzungsstufe mindestens ein mit dem ersten Zwischenzahnrad kämmendes zweites Zwischenzahnrad aufweisen, das neben einer mit der zweiten Verzahnung des ersten Zwischenzahnrads kämmenden dritten Verzahnung eine vierte Verzahnung aufweist.

Das Untersetzungsgetriebe kann weiterhin als dritte Untersetzungsstufe das mit dem zweiten Zwischenzahnrad kämmende erste Zahnrad aufweisen, das neben einer mit der vierten Verzahnung des zweiten Zwischenzahnrads kämmenden fünften Verzahnung eine sechste Verzahnung aufweist, wobei die sechste Verzahnung mit einem der Zahnstangenprofile kämmt.

Dabei ist besonders bevorzugt vorgesehen, dass das Untersetzungsgetriebe nur ein einziges erstes Zwischenzahnrad aufweist, indes zwecks Synchronisation zweier erster Zahnräder zwei zweite Zwischenzahnräder aufweist, wobei diese mit ihren jeweiligen dritten Verzahnungen miteinander kämmen.

Damit wird in sehr vorteilhafter Weise der Einsatz eines relativ kleinen Servomotors mit hoher Drehzahl als Antriebsmotor für das Auswerfergetriebe möglich. Durch die beanspruchte Ausgestaltung ist nämlich ein geringes Massenträgheitsmoment um die Drehachse des Antriebsmotors sichergestellt.

Das Zahnstangenelement kann zwecks genauer Führung während der translatorischen Bewegung mit einem Führungselement versehen sein, das es bei seiner translatorischen Bewegung in Schließrichtung führt. Das Führungselement ist dabei vorzugsweise als Führungsstange ausgebildet, die in eine in Längsrichtung des Zahnstangenelements verlaufende Innenbohrung eintaucht.

Das Zahnstangenelement ist also erfindungsgemäß - zwecks vollständiger Kapselung - relativ zu einem Gehäuse des Untersetzungsgetriebes durch ein Dichtungselement abgedichtet. Dabei ist das Dichtungselement als Teleskopbuchse mit mindestens zwei relativ zueinander beweglichen Hülsenelementen ausgebildet.

In vorteilhafter Weise wird durch die vorliegende Erfindung ein sehr dynamisches elektrisches Antriebssystem für ein Auswerferelement zur Verfügung gestellt, das in einen vorhandenen Einbauraum in der Spritzgießmaschine relativ einfach integriert werden kann; dies gilt insbesondere für den Einsatz in einer Kniehebel-Schließeinheit.

Durch die vorgeschlagene Lösung wird es in relativ einfacher Weise möglich, Kollisionen des Auswerferelements zu vermeiden, was wiederum mit der hohen Dynamik im Zusammenhang steht, die erreichbar ist.

Das Auswerfersystem kann als komplett geschlossene Einheit ausgeführt werden. Damit ist die gelegentlich gewünschte bzw. benötigte Ölfreiheit in der Spritzgießmaschine in einfacher Weise zu gewährleisten.

Auf eine Drehmomentstütze, wie sie bei vorbekannten Kugelgewindetrieben nötig ist, kann verzichtet werden. Die Führung des Auswerferelements kann wie beschrieben in einfacher Weise und somit kostengünstig realisiert werden.

Das vorgeschlagene Konzept lässt sich mit unterschiedlichen Getriebegrößen für die verschiedenen Anforderungen an die Größe und die Kräfte sämtlicher Spritzgießmaschinen realisieren. Abhängig vom Anwendungszweck (Auswerfer oder Schließeinheit) können die Bauteile entsprechend dimensioniert werden.

In der Zeichnung ist ein Ausführungsbeispiel der Erfindung dargestellt. Es zeigen:
- Fig. 1: die Seitenansicht eines Teils einer Schließeinheit einer Spritzgießmaschine, wobei ein Auswerferelement in Form einer Auswerferplatte vorhanden ist,
- Fig. 2a: in der Seitenansicht den Aktuator der Auswerferplatte in eingefahrener Stellung,
- Fig. 2b: in der Seitenansicht den Aktuator der Auswerferplatte in ausgefahrener Stellung und
- Fig. 3: schematisch in der Seitenansicht den Aktuator der Auswerferplatte mit den vorgesehenen Zahnrädern eines Untersetzungsgetriebes.

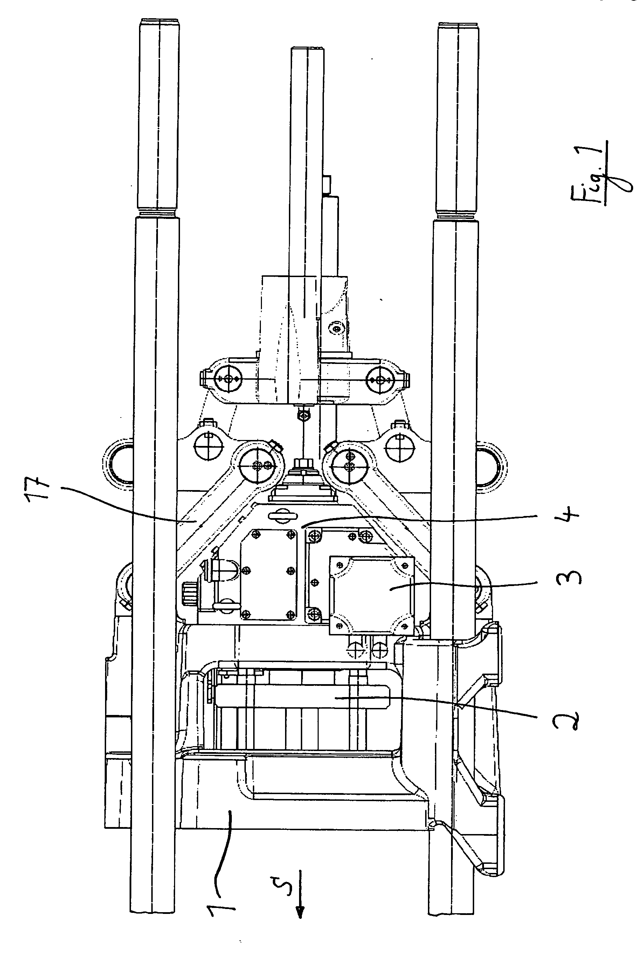

In Fig. 1 ist eine Schließeinheit einer Spritzgießmaschine dargestellt, von der ein Kniehebel 17 zu erkennen ist. Die Schließeinheit hat eine Werkzeugaufspannplatte 1, die von der Schließeinheit zum Öffnen und Schließen des Spritzgießwerkzeugs in eine Schließrichtung S bewegt werden kann.

Damit fertig spritzgegossene Formteile aus dem Spritzgießwerkzeug entformt werden können, ist ein Auswerferelement 2 in Form einer Auswerferplatte vorgesehen. Die Auswerferplatte 2 kann in Schließrichtung S verschoben werden, wodurch Auswerferstifte in die Spritzgießkavität eingefahren werden können. Hierzu ist ein Aktuator 4 vorhanden, d. h. ein Auswerfergetriebe, das von einem Motor 3 in Form eines schnelldrehenden Servomotors angetrieben ist.

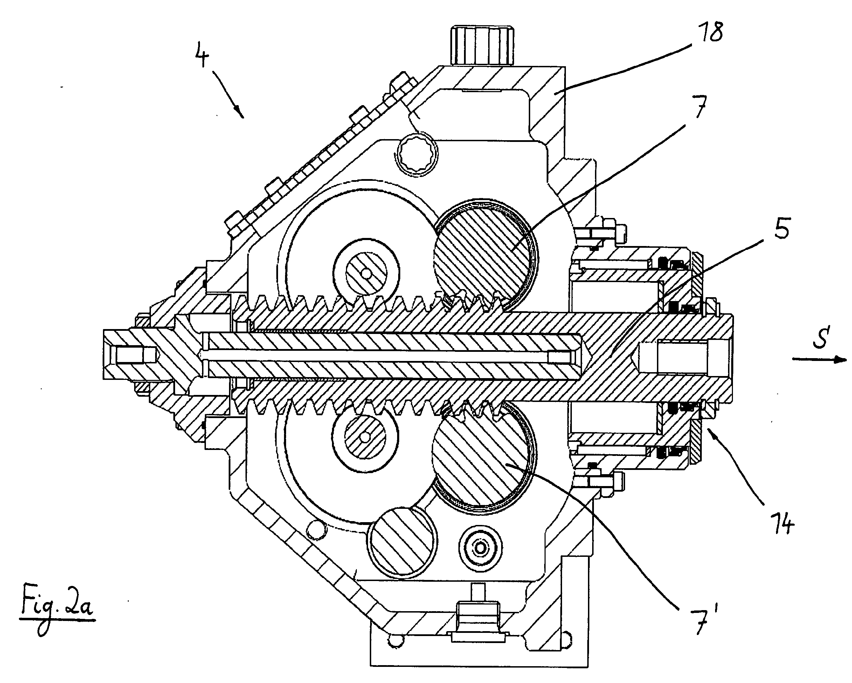

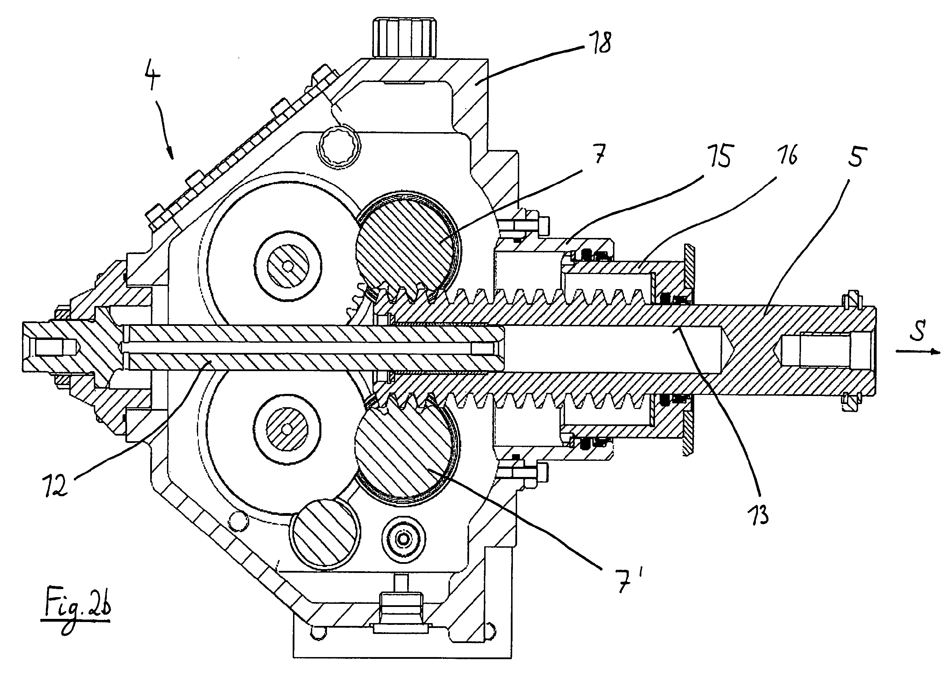

Das Auswerfergetriebe 4 ist für zwei verschiedene Arbeitspositionen in den Figuren 2a und 2b skizziert. Fig. 2a zeigt das Auswerfergetriebe 4 in einer Stellung, in der ein Betätigungselement - gebildet von einem Zahnstangenelement 5 - in einer eingefahrenen Stellung ist (Status während des Spritzgießvorgangs selber); indes zeigt Fig. 2b das Zahnstangenelement 5 in einer ausgefahrenen Stellung (Status beim Ausstoßen von fertigen Formteilen aus dem Spritzgießwerkzeug).

Das Zahnstangenelement 5 ist also durch das Auswerfergetriebe 4 in Schließrichtung S bewegbar, was durch den Motor 3 (s. Fig. 1) veranlasst wird. Das (in Fig. 2a/2b rechte) axiale Ende des Zahnstangenelements 5 ist mit der Auswerferplatte 2 verbunden, d. h. diese wird mittels des Zahnstangenelements 5 axial in Schließrichtung S verschoben.

Der Aufbau und die Arbeitsweise des Auswerfergetriebes 4 gehen aus der Zusammenschau der Figuren hervor.

In einem Gehäuse 18 ist ein Untersetzungsgetriebe 8 angeordnet, das einen Kernbestandteil des Auswerfergetriebes 4 darstellt. Der Motor 3 hat ein Antriebsritzel 6, mit dem das Untersetzungsgetriebe 8 angetrieben wird. Ferner hat das Untersetzungsgetriebe 8 zwei erste Zahnräder 7 und 7`, die mit dem Zahnstangenelement 5 in Eingriff stehen. Genauer gesagt, weist das Zahnstangenelement 5 an zwei sich gegenüberliegenden Längsseiten je ein Zahnstangenprofil 9 und 9' auf, mit dem je ein erstes Zahnrad 7 und 7' kämmt.

Demgemäß wird die Drehung des Antriebsritzels 6 des Motors 3 vom Untersetzungsgetriebe 8 ins Langsame untersetzt und damit die ersten Zahnräder 7 und 7' so angetrieben, dass das Zahnstangenelement 5 durch den Eingriff der beiden ersten Zahnräder 7, 7' in die Zahnstangenprofile 9, 9' in Schließrichtung S bewegt werden kann.

Zum Aufbau des als mehrstufiges Stirnradgetriebe aufgebauten Untersetzungsgetriebes 8 sei folgendes erläutert:

Das Untersetzungsgetriebe 8 hat als erste Untersetzungsstufe ein mit dem Antriebsritzel 6 des Motors 3 kämmendes erstes Zwischenzahnrad 10. Das Zwischenzahnrad 10 hat eine mit dem Antriebsritzel 6 kämmende erste Verzahnung V1; ferner hat es eine zweite Verzahnung V2.

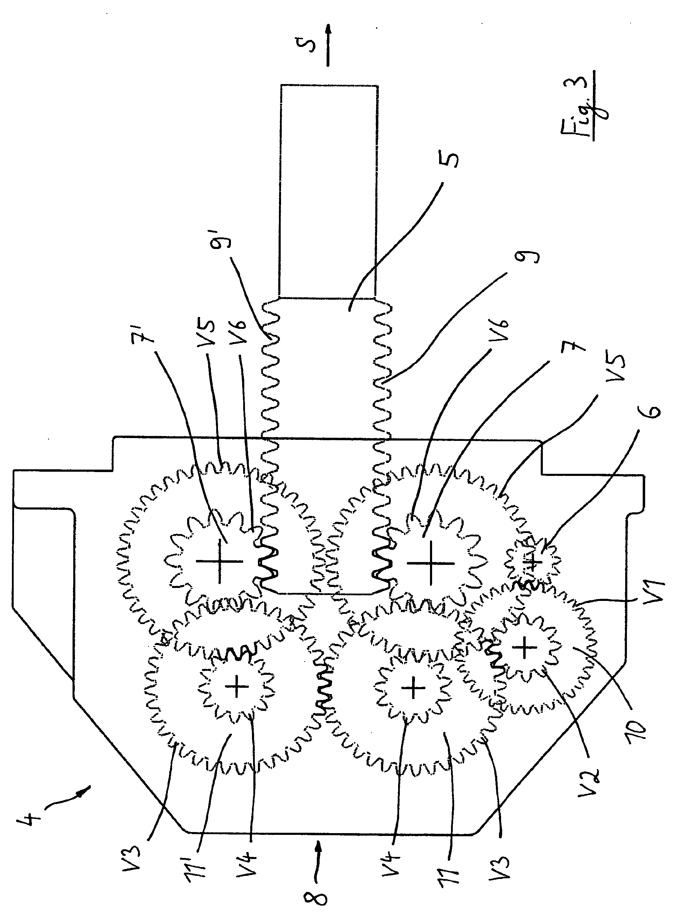

Das Untersetzungsgetriebe 8 hat dann als zweite Untersetzungsstufe ein mit dem ersten Zwischenzahnrad 10 kämmendes zweites Zwischenzahnrad 11. Von den zweiten Zwischenzahnrädern 11 sind zwei Stück vorhanden, die identisch ausgebildet sind und eine dritte Verzahnung V3 sowie eine vierte Verzahnung V4 aufweisen. Das in Fig. 3 unten dargestellte zweite Zwischenzahnrad 11 steht mit seiner dritten Verzahnung V3 mit der zweiten Verzahnung V2 des ersten Zwischenzahnrads 10 in Eingriff. Indes stehen die beiden zweiten Zwischenzahnräder 11 und 11' über ihre Verzahnungen V3 auch miteinander in Eingriff, so dass das obere zweite Zwischenzahnrad 11' gegensinnig zum unteren zweiten Zwischenzahnrad 11 dreht.

Schließlich hat das Untersetzungsgetriebe 8 als dritte Untersetzungsstufe die beiden mit dem zweiten Zwischenzahnrad 11 bzw. 11' kämmenden ersten Zahnräder 7 bzw. 7`. Das erste Zahnrad 7, 7' hat dabei eine fünfte Verzahnung V5, die mit der vierten Verzahnung V4 des zweiten Zwischenzahnrads 11 bzw. 11' kämmt; dann hat es schließlich eine sechste Verzahnung V6, die mit dem Zahnstangenprofil 9 bzw. 9' kämmt.

Es ist also nur ein einziges Zwischenzahnrad 10 vorhanden, während zwecks Synchronisation der beiden ersten Zahnräder 7 und 7' zwei zweite Zwischenzahnräder 11 bzw. 11' vorhanden sind, die über ihre beiden dritten Verzahnungen V3 miteinander kämmen.

Ein mögliches Ausführungsbeispiel sieht folgendes vor: Das Ritzel 6 kann hiernach zwischen 8 und 16 Zähnen haben, die erste Verzahnung V1 kann zwischen 30 und 50 Zähnen haben; die zweite Verzahnung V2 kann zwischen 8 und 16 Zähnen haben. Die dritte Verzahnung V3 kann zwischen 30 und 60 Zähnen haben, die vierte Verzahnung V4 hat wiederum zwischen 8 und 16 Zähnen. Die fünfte Verzahnung V5 hat wiederum zwischen 30 und 60 Zähnen. Die sechste Verzahnung V6 hat zwischen 8 und 16 Zähnen. Hieraus ergibt sich eine entsprechende Untersetzung der Drehung des Motorritzels 6 ins Langsame.

Zur Führung des Zahnstangenelements 5 im Gehäuse 18 ist vorgesehen, dass das Zahnstangenelement 5 eine Innenbohrung 13 aufweist. In diese Innenbohrung 13 tritt ein ortsfest im Gehäuse 18 angeordnetes stab- bzw. stiftförmiges Führungselement 12 ein, so dass das Zahnstangenelement 5 gerührt wird.

Die Aufgabenstellung einer Führung des Auswerferelements (Zahnstangenelement 5) wird insoweit also mit einer hohlgebohrten Zahnstange (Innenbohrung 13) und einer darin zentrierten Führungssäule (Führungselement 12) gelöst. Eine Verdrehsicherung der Zahnstange 5 wird durch die bauartbedingte Breite der Zahnstange gewährleistet.

Ferner ist ein Dichtungselement 14 vorgesehen, um den Inneraum des Gehäuses 18 gegen die Umgebung abzudichten. Das Dichtungselement 14 weist hierfür zwei teleskopartig zusammenwirkende Hülsenelemente 15 und 16 auf.

Die Drehbewegung des elektrischen Antriebsmotors 3 lässt sich gemäß der vorliegenden Erfindung also in die lineare Bewegung des Auswerfers umwandeln, wofür eine Zahnstange mit eingreifenden Zahnrädern 7, 7' zum Einsatz kommt. Ein geringes Massenträgheitsmoment wird dadurch erreicht, dass über eine möglichst große Getriebeuntersetzung ein relativ kleiner Servomotor 3 mit hohen Drehzahlen einsetzbar ist.

Die aus der vorgegebenen Axialkraft des Auswerferelements entstehenden Drehmomente werden konzeptbedingt durch das insgesamt 4-stufiges Untersetzungsgetriebe 8 übersetzt. Die für den doppelseitigen Zahnstangeneingriff in die Zahnstangenprofile 9 und 9' notwendige Drehrichtungsumkehr für den oberen und unteren Zahneingriff an der Zahnstange 5 wird durch die beiden kämmenden zweiten Zwischenzahnräder 11, 11' erreicht, d. h. diese Drehrichtungsumkehr erfolgt nicht direkt an den ersten Zahnrädern 7, 7', die mit den Zahnstangenprofilen 9, 9' kämmen, sondern erst in der 3. Getriebestufe. Dies hat den Vorteil, dass die Drehmomentsummierung erst dort stattfindet, wo kleinere Antriebsdrehmomente aufgrund der vorgeschalteten Untersetzung vorhanden sind. Durch diese Maßnahme wird es in vorteilhafter Weise möglich, das Getriebe sehr kompakt zu bauen, um es in den vorhandenen Einbauraum integrieren zu können.

Um eine geschlossene Einheit und Öldichtigkeit der Zahnstange 5 zu erreichen, wurde die Zahnstange mit einem zylindrischen Teil und einer Teleskopbüchse 15, 16 ausgerüstet, die den erforderlichen Auswerferhub im gegebenen Einbauraum ermöglicht.

Das Ausführungsbeispiel wurde für ein Auswerfersystem erläutert.

### Bezugszeichenliste:

- 1: Werkzeugaufspannplatte
- 2: Teil (Auswerferelement bzw. Auswerferplatte / Kreuzkopf)
- 3: Motor (Antriebsmotor)
- 4: Aktuator (Auswerfergetriebe)
- 5: Zahnstangenelement
- 6: Antriebsritzel des Motors
- 7: erstes Zahnrad
- 7': erstes Zahnrad
- 8: Untersetzungsgetriebe
- 9: Zahnstangenprofil
- 9': Zahnstangenprofil
- 10: erstes Zwischenzahnrad
- 11: zweites Zwischenzahnrad
- 11': zweites Zwischenzahnrad
- 12: Führungselement
- 13: Innenbohrung
- 14: Dichtungselement
- 15: Hülsenelement
- 16: Hülsenelement
- 17: Kniehebel
- 18: Gehäuse des Untersetzungsgetriebes
- S: Schließrichtung

- V1: erste Verzahnung
- V2: zweite Verzahnung
- V3: dritte Verzahnung
- V4: vierte Verzahnung
- V5: fünfte Verzahnung
- V6: sechste Verzahnung

## Patentansprüche

1. Spritzgießmaschine, umfassend zwei relativ zueinander in eine Schließrichtung (S) bewegliche Werkzeugaufspannplatten (1), wobei die Spritzgießmaschine mindestens einen von einem Motor (3) angetriebenen Aktuator (4) aufweist, mit dem ein Teil (2) der Spritzgießmaschine in eine translatorische Verschieberichtung bewegt werden kann, wobei der Aktuator (4) ein mit dem Teil (2) in Verbindung stehendes Zahnstangenelement (5) aufweist, wobei zwischen einem Antriebsritzel (6) des Motors (3) und mindestens einem mit dem Zahnstangenelement (5) kämmenden ersten Zahnrad (7, 7') ein Untersetzungsgetriebe (8) angeordnet ist,
**dadurch gekennzeichnet, dass**
das Teil (2) ein an mindestens einer der Werkzeugaufspannplatten (1) angeordnetes Auswerferelement ist, das relativ zur Werkzeugaufspannplatte (1) in Schließrichtung (S) beweglich angeordnet ist, wobei das Zahnstangenelement (5) relativ zu einem Gehäuse (18) des Untersetzungsgetriebes (8) durch ein Dichtungselement (14) abgedichtet ist, wobei das Dichtungselement (14) als Teleskopbuchse mit mindestens zwei relativ zueinander beweglichen Hülsenelemente (15, 16) ausgebildet ist.

2. Spritzgießmaschine nach Anspruch 1, **dadurch gekennzeichnet, dass** das Auswerferelement eine Auswerferplatte ist.

3. Spritzgießmaschine nach Anspruch 1 oder 2, **dadurch gekennzeichnet, dass** das Zahnstangenelement (5) an zwei sich gegenüberliegenden Seiten je ein Zahnstangenprofil (9, 9') aufweist, wobei zwei mit dem Zahnstangenelement (5) kämmende erste Zahnräder (7, 7') für je ein Zahnstangenprofil (9, 9') vorgesehen sind und wobei die mit dem Zahnstangenelement (5) kämmenden ersten Zahnräder (7, 7') vom Untersetzungsgetriebe (8) synchron bewegt werden.

4. Spritzgießmaschine nach einem der Ansprüche 1 bis 3, **dadurch gekennzeichnet, dass** das Untersetzungsgetriebe (8) als mehrstufiges Stirnradgetriebe ausgebildet ist.

5. Spritzgießmaschine nach Anspruch 4, **dadurch gekennzeichnet, dass** das Untersetzungsgetriebe (8) als erste Untersetzungsstufe ein mit dem Antriebsritzel (6) des Motors (3) kämmendes erstes Zwischenzahnrad (10) aufweist, das neben einer mit dem Antriebsritzel (6) kämmenden ersten Verzahnung (V1) eine zweite Verzahnung (V2) aufweist.

6. Spritzgießmaschine nach Anspruch 5, **dadurch gekennzeichnet, dass** das Untersetzungsgetriebe (8) als zweite Untersetzungsstufe mindestens ein mit dem ersten Zwischenzahnrad (10) kämmendes zweites Zwischenzahnrad (11, 11') aufweist, das neben einer mit der zweiten Verzahnung (V2) des ersten Zwischenzahnrads (10) kämmenden dritten Verzahnung (V3) eine vierte Verzahnung (V4) aufweist.

7. Spritzgießmaschine nach Anspruch 6, **dadurch gekennzeichnet, dass** das Untersetzungsgetriebe (8) als dritte Untersetzungsstufe das mit dem zweiten Zwischenzahnrad (11, 11') kämmende erste Zahnrad (7, 7') aufweist, das neben einer mit der vierten Verzahnung (V4) des zweiten Zwischenzahnrads (11, 11') kämmenden fünften Verzahnung (V5) eine sechste Verzahnung (V6) aufweist, wobei die sechste Verzahnung (V6) mit einem der Zahnstangenprofile (9, 9') kämmt.

8. Spritzgießmaschine nach Anspruch 6 oder 7, **dadurch gekennzeichnet, dass** das Untersetzungsgetriebe (8) ein einziges erstes Zwischenzahnrad (10) und zwecks Synchronisation zweier erster Zahnräder (7, 7') zwei zweite Zwischenzahnräder (11) aufweist, wobei diese mit ihren jeweiligen dritten Verzahnungen (V3) miteinander kämmen.

9. Spritzgießmaschine nach einem der Ansprüche 1 bis 8, **dadurch gekennzeichnet, dass** das Zahnstangenelement (5) mit einem Führungselement (12) versehen ist, das es bei seiner translatorischen Bewegung in Schließrichtung (S) führt, wobei das Führungselement (12) vorzugsweise als Führungsstange (12) ausgebildet ist, die in eine in Längsrichtung des Zahnstangenelements (5) verlaufende Innenbohrung (13) eintaucht.

## Claims

1. Injection moulding machine, comprising two tool platens (1) which are movable relatively to another in a closing direction (S), wherein the injection moulding machine comprises at least one actuator (4) which is driven by a motor (3) by which actuator a part (2) of the injection moulding machine can be moved in a translational displacement direction, wherein the actuator (4) comprises a rack element (5) which is in connection with the part (2), wherein a reduction gear (8) is arranged between a drive pinion (6) of the motor (3) and at least one first gear-wheel (7, 7') which gear-wheel is meshing with the rack element (5),
**characterized in that**
the part (2) is an ejector element which is arranged at at least one of the tool platen (1) which ejector element is arranged movably relatively to the tool platen (1) in closing direction (S), wherein the rack element (5) is sealed relatively to a housing (18) of the reduction gear (8) by a sealing element (14), wherein the sealing element (14) is designed as telescope sleeve with at least two sleeve elements (15, 16) which are movable relatively to another.

2. Injection moulding machine according to claim 1, **characterized in that** the ejector element is an ejector platen.

3. Injection moulding machine according to claim 1 or 2, **characterized in that** the rack element (5) comprises a rack profile (9, 9') at two opposing sides, wherein two first gear-wheels (7, 7') which are meshing with the rack element (5) are provided for a rack profile (9, 9') and wherein the first gear-wheels (7, 7') which are meshing with the rack element (5) are synchronous moved by the reduction gear (8).

4. Injection moulding machine according to one of claims 1 to 3, **characterized in that** the reduction gear (8) is designed as a multistage spur gear.

5. Injection moulding machine according to claim 4, **characterized in that** the reduction gear (8) comprises as a first reduction stage a first intermediate gear-wheel (10) which is meshing with the drive pinion (6) of the motor (3) which first intermediate gear-wheel comprises a second gearing (V2) beside a first gearing (VI) which is meshing with the drive pinion (6).

6. Injection moulding machine according to claim 5, **characterized in that** the reduction gear (8) comprises as second reduction stage at least one second intermediate gear-wheel (11, 11') which is meshing with the first intermediate gear-wheel (10) which second intermediate gear-wheel comprises a fourth gearing (V4) beside a third gearing (V3) which is meshing with the second gearing (V2) of the first intermediate gear-wheel (10).

7. Injection moulding machine according to claim 6, **characterized in that** the reduction gear (8) comprises as third reduction stage the first gear-wheel (7, 7') which is meshing with the second intermediate gear-wheel (11, 11') which first gear-wheel comprises a sixth gearing (V6) beside a fifth gearing (V5) which is meshing with the fourth gearing (V4) of the second intermediate gear-wheel (11, 11'), wherein the sixth gearing (V6) is meshing with one of the rack profiles (9, 9').

8. Injection moulding machine according to claim 6 or 7, **characterized in that** the reduction gear (8) comprises a single first intermediate gear-wheel (10) and two second intermediate gear-wheels (11) for synchronization of two first gear-wheels (7, 7'), wherein the same are meshing with their respective third gearings (V3).

9. Injection moulding machine according to one of claims 1 to 8, **characterized in that** the rack element (5) is provided with a guiding element (12) which guides the same in closing direction (S) during its translational movement, wherein the guiding element (12) is preferably designed as guiding rod (12) which immerges into an internal bore (13) which runs in longitudinal direction of the rack element (5).

## Revendications

1. Machine de moulage par injection, comprenant deux plaques de serrage d'outil (1) mobiles l'une par rapport à l'autre dans une direction de fermeture (S), la machine de moulage par injection comportant au moins un actionneur (4) entraîné par un moteur (3) avec lequel une partie (2) de la machine de moulage par injection peut être déplacée dans une direction de déplacement translationnelle, l'actionneur (4) comportant un élément à crémaillère (5) relié à la partie (2), un réducteur de vitesses (8) étant disposé entre un pignon d'entraînement (6) du moteur (3) et au moins une première roue dentée (7, 7') s'engrenant avec l'élément à crémaillère (5), **caractérisée en ce que** la partie (2) est un élément éjecteur disposé au niveau d'au moins une des plaques de serrage d'outil (1) et disposé de façon mobile par rapport à la plaque de serrage d'outil (1) dans la direction de fermeture (S), l'élément à crémaillère (5) étant étanchéifié par un élément d'étanchéité (14) par rapport à un carter (18) du réducteur de vitesses (8), l'élément d'étanchéité (14) étant réalisé sous la forme d'une douille télescopique pourvue d'au moins deux éléments de douille (15, 16) mobiles l'un par rapport à l'autre.

2. Machine de moulage par injection selon la revendication 1, **caractérisée en ce que** l'élément éjecteur est une plaque éjectrice.

3. Machine de moulage par injection selon la revendication 1 ou 2, **caractérisée en ce que** l'élément à crémaillère (5) comporte un profil de crémaillère (9, 9') au niveau des deux côtés respectivement opposés, deux premières roues dentées (7, 7') s'engrenant avec l'élément à crémaillère (5) étant respectivement prévues pour un profil de crémaillère (9, 9') et les premières roues dentées (7, 7') s'engrenant avec l'élément à crémaillère (5) étant déplacées de façon synchrone par le réducteur de vitesses (8).

4. Machine de moulage par injection selon l'une quelconque des revendications 1 à 3, **caractérisée en ce que** le réducteur de vitesses (8) est réalisé sous la forme d'un engrenage droit à plusieurs étages.

5. Machine de moulage par injection selon la revendication 4, **caractérisée en ce que** le réducteur de vitesses (8) servant de premier étage de réduction comporte une première roue dentée intermédiaire (10) s'engrenant avec le pignon d'entraînement (6) du moteur (3) comportant outre un premier endentement d'extrémité (V1) s'engrenant avec le pignon d'entraînement (6) un deuxième endentement d'extrémité (V2).

6. Machine de moulage par injection selon la revendication 5, **caractérisée en ce que** le réducteur de vitesses (8) servant de deuxième étage de réduction comporte au moins une deuxième roue dentée intermédiaire (11, 11') s'engrenant avec la première roue dentée intermédiaire (10) comportant, outre un troisième endentement d'extrémité (V3) s'engrenant avec le deuxième endentement d'extrémité (V2) de la première roue dentée intermédiaire (10), un quatrième endentement d'extrémité (V4).

7. Machine de moulage par injection selon la revendication 6, **caractérisée en ce que** le réducteur de vitesses (8) servant de troisième étage de réduction comporte la première roue dentée (7, 7') s'engrenant avec la deuxième roue dentée intermédiaire (11, 11') comportant, outre un cinquième endentement d'extrémité (V5) s'engrenant avec le quatrième endentement d'extrémité (V4) de la deuxième roue dentée intermédiaire (11, 11'), un sixième endentement d'extrémité (V6), le sixième endentement d'extrémité (V6) s'engrenant avec un des profils de crémaillère (9, 9').

8. Machine de moulage par injection selon la revendication 6 ou 7, **caractérisée en ce que** le réducteur de vitesses (8) comporte une première roue dentée intermédiaire (10) unique et à des fins de synchronisation deux premières roues dentées (7, 7') de deux deuxièmes roues dentées intermédiaires (11), celles-ci s'engrenant entre elles avec leurs troisièmes endentements d'extrémité (V3) respectifs.

9. Machine de moulage par injection selon l'une quelconque des revendications 1 à 8, **caractérisée en ce que** l'élément à crémaillère (5) est pourvu d'un élément de guidage (12) guidé dans son mouvement translationnel dans la direction de fermeture (S), l'élément de guidage (12) étant de préférence réalisé sous la forme d'une tige de guidage (12) plongeant dans un alésage intérieur (13) s'étendant dans la direction longitudinale de l'élément à crémaillère (5).
